# EUROPÄISCHE PATENTSCHRIFT

(11) **EP 2 969 514 B1**
(45) Veröffentlichungstag und Bekanntmachung des Hinweises auf die Patenterteilung: **25.10.2023**
(21) Anmeldenummer: 14731134.4
(22) Anmeldetag: 14.03.2014
(51) Int. Cl.: D21B 1/32, D21B 1/34, B30B 9/12, D21C 9/18, D21C 9/00, D21C 5/02

(54) **SCHNECKENPRESSE MIT EINEM FÖRDERROHR SOWIE EIN VERFAHREN ZUM BETRIEB EINER SCHNECKENPRESSE**
SCREW PRESS WITH A DELIVERY PIPE AND METHOD FOR OPERATING A SCREW PRESS
PRESSE À VIS POURVUE D'UN TUBE DE TRANSPORT ET PROCÉDÉ POUR FAIRE FONCTIONNER UNE PRESSE À VIS

(30) Priorität: 15.03.2013 DE 102013004416; 15.11.2013 DE 102013019056
(43) Veröffentlichungstag der Anmeldung: 20.01.2016
(73) Patentinhaber: Boltersdorf, Hans-Joachim, 56656 Brohl-Lützing (DE)
(72) Erfinder: Boltersdorf, Hans-Joachim, 56656 Brohl-Lützing (DE)
(74) Vertreter: Castell, Klaus
(86) Internationale Anmeldenummer: PCT/DE2014/000124
(87) Internationale Veröffentlichungsnummer: WO 2014/139505

(56) Entgegenhaltungen:
- EP-A1- 1 759 831
- EP-A2- 0 858 880
- CH-A- 400 753
- DE-A1- 3 013 091
- JP-A- S5 813 497
- US-A- 3 877 365
- US-A- 4 273 035

## Beschreibung

Die Erfindung betrifft eine Schneckenpresse mit einem Förderrohr, in dem eine drehbare Förderwendel angeordnet ist und mit einem Förderkonus, zu dem die Förderwendel fördert.

Eine derartige Schneckenpresse ist beispielsweise aus der DE 200 00912 U1 bekannt. Diese Schneckenpresse dient dazu, Abfall zu kompaktieren und in einen Container zu schieben. Mit ihr können trockene Abfälle zunächst in einem konischen Rohr vorverdichtet werden, um anschließend mittels aufeinander zu bewegbaren Klappen nachverdichtet zu werden. Die Schneckenpresse ist für lockere Abfälle wie beispielsweise Kunststoffflaschen konzipiert und dient dazu, den Container möglichst vollständig mit gepressten Flaschen zu füllen.

Die EP 0 858 880 A2 beschreibt eine Schneckenpresse mit einem Förderrohr, in dem eine drehbare Förderwendel angeordnet ist, und einem Förderrohrkonus mit Entwässerungsöffnungen. Ähnliche Schneckenpressen beschreiben die DE 30 13 091 A1, die US 3 877 365 A sowie die US 4 273 035 A, die EP 1 759 831 A1, die CH 400 753 A und die JP S58 13497 A.

Der Erfindung liegt die Aufgabe zu Grunde, mit einer Schneckenpresse sehr feuchte Abfallstoffe wie Pulpe aus einem Pulper zu behandeln. Diese Abfallstoffe haben 5 % bis 20 % Feststoff und somit 80 % bis 95 % Wasser in loser oder gebundener Form.

Diese Aufgabe wird mit einer Schneckenpresse mit den Merkmalen des Patentanspruchs 1 und einem Verfahren mit den Merkmalen des Patentanspruchs 11 gelöst.

Unerwarteter Weise hat sich herausgestellt, dass eine Schneckenpresse, die zur Befüllung eines Containers mit gepressten Kunststoffflaschen konzipiert wurde, auch für das Kompaktieren von Pulpe verwendet werden kann, indem einfach nur im Förderrohrkonus Entwässerungsöffnungen angeordnet werden. Dies erlaubt es, mit dem Druck der Förderwendel das Material gegen den Förderrohrkonus zu drücken und insbesondere dort zu entwässern.

Es hat sich gezeigt, dass es für die Funktion der Schneckenpresse besonders vorteilhaft ist, wenn die Förderwendel am Übergang von Förderrohr zum Förderrohrkonus endet. Die Wendel erstreckt sich somit nicht oder nur unwesentlich in den Förderrohrkonus hinein, um im Förderrohrkonus eine Kompaktierung zu erreichen. Dadurch wird in der Hauptkompressionszone die Reibung stark reduziert, weil dort keine Reibung mehr zwischen der Förderwendel und dem zu komprimierenden Material stattfindet. Gepresst wird dadurch durch das Hineinfördern in den Konus. Die Wendel reicht nicht in den Konus hinein, um dort ein Verschließen der Kapillaren zu vermeiden.

Die reduzierte Reibung führt zu einer reduzierten Temperaturerhöhung. Dies ist insbesondere für Materialien relevant, die Kunststoffe aufweisen. Die Temperaturerhöhung kann zu einem Schmelzen der Kunststoffe und dadurch zu einem Verbacken des Materials führen. Wenn nicht nur eine Kompression zur Minimierung des Volumens gefordert wird, sondern anschließend eine mechanische Fraktionierung durchgeführt werden soll, muss bei der Entwässerung die Temperaturerhöhung in Grenzen gehalten werden. Die beschriebene Schneckenpresse ermöglicht eine sehr starke Entwässerung ohne zu starke Temperaturerhöhung. Die Regelung wird so eingestellt, dass zwar eine Temperaturerhöhung eintritt, um die Entwässerung zu fördern aber ein Verbacken von angeschmolzenen Kunststoffen vermieden wird.

Sofern beispielsweise bei einer Behandlung von Abfallstoffen aus der Papierindustrie die Abfallstoffe durch Pressen weitgehend entwässert werden, ohne die Kunststoffe wie Polyolefine zu schmelzen, können die Abfallstoffe anschließend mit einfachen Mitteln beispielsweise mechanisch mit Sieben und/oder im Windsichter desagglomeriert werden.

Besonders vorteilhaft ist es, wenn die Entwässerungsöffnungen im radial inneren Bereich des Förderrohrkonus angeordnet sind. Dazu ist die Oberfläche des Konus in radialer Richtung zweigeteilt und die Öffnungen sind vorzugsweise nur im radial inneren Teil der Oberfläche angeordnet.

Besonders vorteilhaft ist es, wenn auch im Förderrohr Entwässerungsöffnungen angeordnet sind.

Der kleinste Durchmesser des Förderrohrkonus ist in Abhängigkeit vom Material zu wählen. Um eine gute Funktion des Konus zu erzielen sollte er so klein wie möglich sein und, um eine Selbsthemmung zu vermeiden, muss der freie Durchmesser des Konus so gewählt werden, dass die zu kompaktierenden Stoffe nicht größer sind als die freie Durchgangsfläche des Konus.

Vorteilhaft ist es, wenn die Entwässerungsöffnungen im Förderrohrkonus im Bereich der Konusspitze kleiner sind als im Bereich der Konusbasis. Außerdem können pro Fläche im Bereich der Konusspitze mehr Löcher angeordnet sein als im Bereich der Basis. Die letzte Lochreihe und die Löcher mit dem kleinsten Durchmesser entscheiden dann über den maximal erreichbaren Trocknungsgrad. Die Löcher im Bereich der Spitze können Langlöcher sein, die sich vorzugsweise zur Spitze hin erstrecken. Dadurch wird die Länge der Wege, die die Flüssigkeit im Konus durch das geförderte Material zurücklegen muss, verringert. Im Bereich des Förderrohres werden bevorzugt weniger Löcher pro Fläche angeordnet, um in diesem Bereich die Reibung zu minimieren.

Um den Antrieb der Förderwendel zu steuern oder zu regeln wird vorgeschlagen, dass im Förderrohr und/oder im Förderrohrkonus eine Druckmesseinrichtung angeordnet ist. Diese Druckmesseinrichtung kann jedoch auch dazu dienen, eine Wasserzugabe am Förderrohr oder im Förderkonus zu steuern, um zu hohe Drücke zu vermeiden und die Schneckenpresse mit Wasser zu schmieren, um eine kontinuierliche Verdichtung zu erzielen.

Insbesondere die Verdichtung von bereits vorkompaktiertem Material führt zu einer Temperaturerhöhung, die ein Anzeichen für eine Verfestigung ist. Es wird daher vorgeschlagen, dass im Förderrohr und/oder im Förderrohrkonus eine Temperaturmesseinrichtung angeordnet ist. Auch die Temperaturmesseinrichtung ermittelt einen Wert, der zur Steuerung des Förderwendelantriebs und zur Steuerung einer Wasserzugabe zur Schneckenpresse verwendet werden kann.

Da die Schneckenpresse im Wesentlichen dazu dient, aus einem wässrigen Material wie beispielsweise Pulpe Wasser zu entfernen, wird vorgeschlagen, dass im Förderrohr und/oder im Förderrohrkonus eine Feuchtemesseinrichtung angeordnet ist. Dies dient dazu, regeltechnisch dafür zu sorgen, dass einerseits eine Entwässerung erzielt wird und andererseits eine zu starke Entwässerung, die die Drehbarkeit der Förderwendel behindert, vermieden wird.

Umso trockener die geförderte Pulpe ist, umso stärker ist die Reibung an den Innenwänden der Schneckenpresse. Daher wird vorgeschlagen, dass die Schneckenpresse eine bereichsweise polierte und/oder verchromte Innenfläche aufweist. Dabei ist es vorteilhaft, wenn die Innenfläche des Förderrohrs und/oder die Oberfläche der Schnecke zumindest bereichsweise reibungsarm gestaltet und vorzugsweise poliert und/oder verchromt sind. Auch im Bereich des Förderrohrkonus ist eine polierte und/oder verchromte Innenfläche vorteilhaft, da dort ein hoher Druck zwischen gefördertem Material und der Innenseite der Schneckenpresse entsteht.

Obwohl das Förderrohr der Schneckenpresse der Entwässerung dient, wird vorgeschlagen, dass das Förderrohr einen Wasserzulauf aufweist. Ein Wasserzulauf am Förderrohr ermöglicht es, an der Innenfläche des Förderrohrs einen Flüssigkeitsfilm aufrechtzuerhalten, der das Gleiten des zu kompaktierenden Materials zum Förderrohrkonus erleichtert. In entsprechender Weise kann auch am Förderrohrkonus ein Wasserzulauf vorgesehen sein, der bei besonderen Betriebszuständen der Schneckenpresse einen Wasserzustrom zur Schneckenpresse ermöglicht, um die Temperatur zu reduzieren und das Fließverhalten des geförderten Materials zu verbessern. Der dadurch erzeugte hydraulische Gegendruck kann helfen, die Gleitfreudigkeit des Materials bis hin zum Konus zu steigern, um den Energiebedarf zu reduzieren.

Ein einfacher Aufbau der Schneckenpresse wird dadurch erzielt, dass die Förderwendel einen über ihre Länge gleichbleibenden Durchmesser aufweist. Eine Entwässerung entsteht dann vor allem durch den im Förderrohr entstehenden Rückstau in Folge der Verengung am Förderrohrkonus.

Mit der Förderwendel kann eine bestimmte Entwässerung erreicht werden. Eine stärkere Entwässerung würde zu einer besonders hohen Energieaufnahme an der Wendel führen. Daher wird vorgeschlagen, dass dem Förderrohrkonus ein Kompakter nachgeschaltet ist. Dadurch entsteht eine zweistufige Kompaktierung, die einen kontinuierlichen Fluss des zu kompaktierenden Mediums ermöglicht.

Bei der Verwendung eines derartigen Kompakters ist es vorteilhaft, wenn der Kompakter bewegliche Klappen aufweist. Diese nachgeschaltete Kompaktierungseinrichtung basiert somit auf einem anderen Kompaktierungsverfahren und ermöglicht dadurch eine besonders hohe Verdichtung bzw. eine besonders gute Entwässerung. Als Kompaktierungseinrichtung kann eine Einrichtung verwendet werden, wie sie aus der DE 200 00 912 U1 und der EP 1 118 455 A2 bekannt ist.

Kumulativ oder alternativ zu einem Kompakter mit beweglichen Klappen wird vorgeschlagen, dass der Kompakter eine drehbare Kompakterwendel aufweist. Diese drehbare Wendel dient wiederum zur Förderung des Materials.

Besonders vorteilhaft ist es, wenn die Kompakterwendel zu einem Kompakterkonus führt. Ein derartiger Kompakterkonus dient als Widerstand und ermöglicht eine weitere Kompaktierung des geförderten Materials.

Ein einfacher Aufbau ergibt sich dadurch, dass Förderwendel und Kompakterwendel auf der gleichen Welle angeordnet sind. Dadurch können Förderwendel und Kompakterwendel durch den gleichen oder die gleichen Motoren angetrieben werden. Damit die Förderwendel und die Kompakterwendel nicht zwangsläufig die gleiche Umdrehungsgeschwindigkeit aufweisen müssen, wird vorgeschlagen, dass zwischen der Förderwendel und der Kompakterwendel ein Getriebe oder eine Kupplung angeordnet ist. Beispielsweise eine Rutschkupplung zwischen Förderwendel und Kompakterwendel sorgt dafür, dass bei zu hohem Widerstand im Bereich der Kompakterwendel die Förderwendel nicht blockiert.

Der Kompakter, der vorzugsweise mit der gleichen Welle wie die Förderwendel angetrieben wird, ermöglicht je nach Material ein Agglomerieren bis hin zum Schmelzfluss oder bis kurz davor bei besonders hoher Energie-, Kosten- und Raumeffizienz.

Insbesondere wenn eine sich durch die gesamte Schneckenpresse erstreckende Welle vorgesehen ist, ist es vorteilhaft, wenn die Welle, an der Förderwendel und Kompakterwendel angeordnet sind, beidseitig von Motoren angetrieben ist. Dies reduziert die Gefahr der Verwindung der Welle bei besonders hohen Widerständen durch das geförderte Gut.

Besonders vorteilhaft ist es, wenn die Schneckenpresse einen Windsichter aufweist, der in Flussrichtung nach dem Förderrohrkonus angeordnet ist. Dies erlaubt es, das entwässerte Material direkt nach dem Förderrohrkonus dem Windsichter zuzuführen oder vor der Windsichtung mechanisch mit Sieb- und/oder Rütteleinrichtungen zu behandeln.

Die der Erfindung zugrunde liegende Aufgabe wird auch mit einem Verfahren zum Betreiben einer derartigen Schneckenpresse gelöst. Dazu weist die Welle der Schneckenpresse an einem Ende einen Motor und am anderen Ende einen Generator auf, und zur Regelung der Wellengeschwindigkeit wird die vom Motor eingebrachte Leistung vom Generator reduziert. Dies ermöglicht eine einfache Regelung der Schneckenpresse.

Bei einem Verfahren zum Betreiben einer derartigen Schneckenpresse kann die Welle der Schneckenpresse an einem Ende einen Motor und am anderen Ende einen Generator aufweisen und zur Regelung der Wellengeschwindigkeit wird die vom Motor eingebrachte Leistung vom Generator reduziert. Dies ermöglicht eine einfache Regelung der Schneckenpresse.

Dabei ist es vorteilhaft, wenn auch der Generator als Motor eingesetzt wird. Besonders vorteilhaft ist es, wenn die an beiden Seiten der Welle eingesetzten Motoren auch als Generatoren verwendet werden können. Dadurch kann je nach Betriebszustand der Schneckenpresse an den jeweiligen Enden der Welle Leistung eingebracht oder entnommen werden. Die Regelung kann durch die an der Welle gemessenen Momente vorgenommen werden.

Auch unabhängig von den zuvor genannten Verfahrensschritten ist es vorteilhaft, wenn an der Innenseite des Förderrohres und/oder des Förderrohrkonus Druck, Temperatur und/oder Feuchte des Fördergutes gemessen wird.

Diese Messwerte können dazu dienen, Motoren und Generatoren zu steuern und zu regeln. Die gemessenen Werte können jedoch auch zur Steuerung eines Wasserzuflusses zum Fördergut verwendet werden, um den Fluss des Fördergutes durch die Schneckenpresse zu erleichtern.

Die gemessenen Werte können jedoch auch dazu dienen, die Geschwindigkeit der Förderwendel oder die Größe eines freien Durchgangsbereiches am Förderrohrkonus und/oder am Kompakterkonus einzustellen. Bei der Verwendung von beweglichen Klappen zur Kompaktierung des Fördergutes kann auch die Position oder die Bewegung der beweglichen Klappen auf der Grundlage dieser Messwerte gesteuert oder geregelt werden. Es wird daher vorgeschlagen, dass der Messwert zur Steuerung der Position von Klappen eines Kompakters verwendet wird.

An jeder Position der Schneckenpresse kann durch die Einleitung von Wasser die Fließfähigkeit des geförderten Gutes verbessert werden. In Bereichen, in denen ein Wasserabfluss vorgesehen ist, kann jedoch auch durch vollständiges oder partielles Verschließen des Wasserabflusses die Förderfähigkeit erhöht werden. Daher wird vorgeschlagen, dass der Messwert vorzugweise auch zur Steuerung eines Wasserabflusses vom Fördergut verwendet wird.

Vorteilhafte Ausführungsbeispiele von Schneckenpressen sind in der Zeichnung dargestellt und werden im Folgenden näher beschrieben.

Es zeigt
- Figur 1: eine Schneckenpresse mit einstufiger Kompaktierung und
- Figur 2: eine Schneckenpresse mit zweistufiger Kompaktierung.

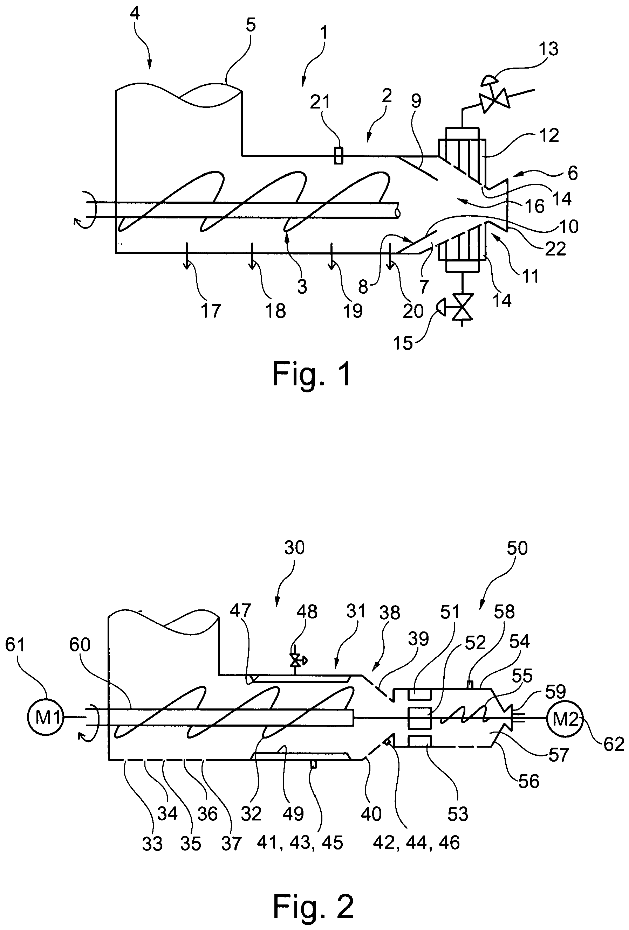

Die in Figur 1 gezeigte Schneckenpresse 1 weist im Wesentlichen ein zylinderförmiges Förderrohr 2 und eine darin angeordnete drehbare Förderwendel 3 auf. An einem Eingangsende 4 ist ein Einlauf 5 vorgesehen und an einem Ausgangsende 6 ist ein Trichter 7 vorgesehen. Der Trichter 7 hat einen inneren Konus 8, der von verstellbaren Platten 9, 10 gebildet wird, und einen äußeren Konus, der als Förderrohrkonus 11 dient und der den Platten 9, 10 in Förderrichtung nachgeschaltet ist. Der Förderrohrkonus 11 weist einen Wasserzufluss als Flüssigkeitszulauf 12 auf, über den von einem geregelten Ventil 13 Wasser durch Öffnungen 14 im Förderrohrkonus 11 in den sich verjüngenden Bereich am Ende des zylinderförmigen Förderrohres 2 gelangt.

Außerdem weist der Förderrohrkonus 11 zur Entwässerung einen Wasserabfluss 14 mit einem geregelten Ventil 15 auf, um aus dem sich verjüngenden Bereich 16 Wasser zu entnehmen.

Der Wasserzufluss 12 kann auch als Wasserabfluss dienen und insbesondere der Wasserabfluss 14 kann auch zur Bewässerung dienen, indem jeweils die Flussrichtung des Wassers umgelenkt wird.

Weitere Entwässerungsöffnungen 17, 18, 19 und 20 befinden sich an der Unterseite des zylinderförmigen Förderrohres 2. Auch die Klappen 9 und 10 können Öffnungen oder Perforierungen aufweisen, um einen Wasserdurchtritt zu ermöglichen. Diese Klappen 9 und 10 sind derart ausgebildet, dass ihre Winkellage relativ zum zylinderförmigen Förderrohr verstellbar ist, um einen einstellbaren inneren Konus 8 zu ermöglichen. Bei einem besonders steilen innen Konus 8 steigt der Druck des geförderten Materials im Bereich des zylinderförmigen Förderrohres 2 und dadurch kann sich die Temperatur des geförderten Materials erhöhen. Daher ist im zylinderförmigen Förderrohr 2 und/oder im Bereich des inneren oder äußeren Konus eine Temperaturmesseinrichtung 21 vorgesehen.

Bei der Verwendung der Schneckenpresse wird das zu entwässernde Material am Einlauf 5 mit beispielsweise 5 % Feststoff im flüssigen Medium zugegeben und entlang des zylinderförmigen Förderrohrs 2 gefördert. Dafür wird die Förderwendel 3 mit einem Motor (nicht gezeigt) gedreht. Das zu fördernde Material gelangt zunächst an die Klappen 9, 10 des inneren Konus 8. Dieser Widerstand führt zu einer Entwässerung des Materials und zu einem Wasserabfluss über die Abflüsse 17 bis 20. Anschließend gelangt das Material zum Förderrohrkonus 11, in dem über den Wasserabfluss 14 weiteres Wasser entzogen wird. Das komprimierte Material gelangt mit beispielsweise 90 % Trockenmasse zum Ausgang 22.

Wenn die Temperaturmesseinrichtung 21 einen zu hohen Messwert ermittelt, können die Klappen 9, 10 des inneren Konus 8 verstellt werden, um den Gegendruck zu verringern. Außerdem können die Wasserabflüsse 17 bis 20 verschlossen werden und letztlich kann sogar durch den Wasserzufluss 12 über das steuerbare Ventil 13 Wasser zugegeben werden, um eine zu starke Kompression und insbesondere ein Verbacken des komprimierten Materials zu vermeiden.

Der spezielle Aufbau ermöglicht es, im kontinuierlichen Betrieb bei variierenden Eigenschaften des zugeführten Materials eine bestimmte Restfeuchte einzuhalten, ohne dass durch zu hohe Drücke eine unerwünschte physikalische Materialveränderung zu befürchten ist.

Eine Weiterentwicklung einer derartigen Schneckenpresse ist in Figur 2 gezeigt. Diese Schneckenpresse 30 hat ein Förderrohr 31 und eine drehbare Förderwendel 32. Zur Entwässerung sind Entwässerungsöffnungen 33 bis 37 im Eingangsbereich des Förderrohrs 31 vorgesehen. Im Förderrohrkonus 38 sind weitere Entwässerungsöffnungen 39, 40 vorgesehen. Im Förderrohr 31 und im Förderrohrkonus 38 sind jeweils Druckmesseinrichtungen 41 und 42, Temperaturmesseinrichtungen 43, 44 und Feuchtemesseinrichtungen 45, 46 angeordnet.

An dem dem Förderrohrkonus 38 zugewandten Ende weist das Förderrohr 31 in seinem zylindrischen Bereich eine polierte Innenfläche 47 auf, die mit einem Wasserzufluss 48 in Verbindung steht, um an der Innenseite des Förderrohres 31 einen Flüssigkeitsfilm 49 auszubilden.

Dem Förderrohrkonus 38 ist ein Kompakter 50 nachgeschaltet, der bewegliche Klappen 51 bis 53 aufweist. Der Kompakter 50 weist im Wesentlichen ein zylindrisches Rohr 54 mit den beweglichen Klappen 51 bis 53 und einer drehbaren Kompakterwendel 55 auf. Diese Kompakterwendel 55 fördert das bereits kompaktierte Material zu einem Kompakterkonus 56, um das bereits kompaktierte Material weiter zu verdichten. Auch der Kompakter weist einen Wasserabfluss 57 auf, der vorzugweise verschließbar gestaltet ist, um den Wasserabfluss im Bereich des Kompakters zu regeln. Um zu hohe Temperaturen zu vermeiden ist ein Wasserzufluss 58 vorgesehen. Das kompaktierte Material gelangt letztlich über den Ausgang 59 nahezu trocken aus dem Kompakter.

Die Förderwendel 32 und die Kompakterwendel 55 sind auf der gleichen Welle 60 angeordnet und die Welle 60 wird an ihren Enden von Motoren 61 und 62 angetrieben. Beide Motoren können auch als Generator dienen.

Beim Betrieb einer derartigen Schneckenpresse kann beispielsweise die Welle 60 durch die zwei Motoren 61 und 62 langsam gedreht werden. Bei stark angestellten Klappen 51 bis 53 wird die freie Durchgangsfläche im Bereich der Klappen reduziert, sodass ein großer Gegendruck entsteht. Dies führt zu einer hohen Temperatur im Bereich des Kompakters 50. Wenn die Temperatur zu hoch steigt, können die Anstellwinkel der Klappen 51 bis 53 reduziert werden, sodass der freie Durchgangsbereich größer wird. Dadurch sinkt der Widerstand, sodass durch die Motoren 61 und 62 das Fördergut schneller durch die Schneckenpresse gefördert wird. Hierdurch sinkt die Temperatur im Bereich des Kompakters 51.

Insbesondere die Verwendung der Motoren auch als Generator ermöglicht es, mit einfachen Motoren und wenig Regelungsaufwand eine kontinuierliche Kompaktierung zu erzielen.

In einem Ausführungsbeispiel werden Getränkekartons in einem Pulper oder einem Aufbereiter, wie er in der WO 2013/135224 beschrieben ist, vorbehandelt und gegebenenfalls werden die Reststoffe noch in einem Hydrozyklon angereichert. Danach werden die Reststoffe in der Schneckenpresse entwässert und dann werden in einer Windsichtung PE-HD und PE-LD getrennt. Dabei ist streng darauf zu achten, dass die Kunststoffe in der Schneckenpresse nicht schmelzen, da gescholzene oder verbackene Kunststofffraktionen für eine Windsichtung nicht geeignet sind.

## Patentansprüche

1. Schneckenpresse (1, 30) mit einem Förderrohr (2, 31), in dem eine drehbare Förderwendel (3) angeordnet ist, und mit einem Förderrohrkonus (11, 38), zu dem die Förderwendel (3, 32) fördert, wobei die Förderwendel am Übergang von der Förderwendel zum Förderkonus endet und im Förderrohrkonus (11, 38) Entwässerungsöffnungen (39, 40) angeordnet sind, ***dadurch gekennzeichnet, dass*** im Förderrohr (2, 31) und/oder im Förderrohrkonus (11, 38) eine Temperaturmesseinrichtung (21, 43, 44) angeordnet ist und dass sie eine Einstelleinrichtung aufweist, um die Größe eines freien Durchgangsbereiches am Förderrohrkonus (11) oder, wenn dem Förderrohrkonus (11, 38) ein Kompakter (50) nachgeschaltet ist, an einem Kompakterkonus auf der Grundlage der gemessenen Temperatur einzustellen, oder um die Position oder die Bewegung von beweglichen Klappen (7, 34) des Kompakters (50) auf der Grundlage der gemessenen Temperatur zu steuern.

2. Schneckenpresse nach Anspruch 1, ***dadurch gekennzeichnet, dass*** im Förderrohr (2, 31) Entwässerungsöffnungen (17 bis 20, 33 bis 37) angeordnet sind.

3. Schneckenpresse nach einem der vorhergehenden Ansprüche, ***dadurch gekennzeichnet, dass*** die Entwässerungsöffnungen im Bereich der Konusspitze des Förderrohrkonus kleiner sind als im Bereich der Konusbasis oder im Bereich der Konusspitze mehr Öffnungen pro Fläche angeordnet sind als im Bereich der Konusbasis.

4. Schneckenpresse nach einem der vorhergehenden Ansprüche, ***dadurch gekennzeichnet, dass*** im Förderrohr (2, 31) und/oder im Förderrohrkonus (11, 38) eine Druckmesseinrichtung (41, 42) angeordnet ist.

5. Schneckenpresse nach einem der vorhergehenden Ansprüche, ***dadurch gekennzeichnet, dass*** im Förderrohr (2, 31) und/oder im Förderrohrkonus (11, 38) eine Feuchtemesseinrichtung (45, 46) angeordnet ist.

6. Schneckenpresse nach einem der vorhergehenden Ansprüche, ***dadurch gekennzeichnet, dass*** sie im Bereich des Förderrohrkonus eine polierte und/oder verchromte Innenfläche (47) aufweist.

7. Schneckenpresse nach einem der vorhergehenden Ansprüche, ***dadurch gekennzeichnet, dass*** das Förderrohr (2, 31) einen Wasserzulauf (48) aufweist oder die Entwässerungsöffnungen vollständig oder partiell verschließbar sind.

8. Schneckenpresse nach einem der vorhergehenden Ansprüche, ***dadurch gekennzeichnet, dass*** der Kompakter (50) eine drehbare Kompakterwendel (55) aufweist.

9. Schneckenpresse nach Anspruch 8, ***dadurch gekennzeichnet, dass*** Förderwendel (3, 32) und Kompakterwendel (55) auf der gleichen Welle (60) angeordnet sind.

10. Schneckenpresse nach Anspruch 9, ***dadurch gekennzeichnet, dass*** die Welle (60) beidseitig von Motoren (61, 62) angetrieben ist.

11. Verfahren zum Betreiben einer Schneckenpresse mit einem Förderrohr (2, 31), in dem eine drehbare Förderwendel (3) angeordnet ist, mit einem Förderrohrkonus (11, 38), zu dem die Förderwendel (3, 32) fördert, wobei die Förderwendel am Übergang von der Förderwendel zum Förderkonus endet und im Förderrohrkonus (11, 38) Entwässerungsöffnungen (39, 40) angeordnet sind, ***dadurch gekennzeichnet, dass*** an der Innenseite des Förderrohres und/oder des Förderrohrkonus die Temperatur des Fördergutes gemessen wird und davon abhängig die Geschwindigkeit der Förderwendel eingestellt wird.

## Claims

1. A screw press (1, 30) with a conveyor pipe (2, 31) in which a rotatable conveyor spiral (3) is arranged, and with a conveyor-pipe cone (11, 38) to which the conveyor spiral (3, 32) conveys, wherein the conveyor spiral terminates at the transition from the conveyor spiral to the conveyor cone and drainage openings (39, 40) are arranged in the conveyor-pipe cone (11, 38), ***characterized in that*** a temperature measuring device (21, 43, 44) is arranged in the conveyor pipe (2, 31) and/or in the conveyor-pipe cone (11, 38) and that it comprises an adjustment device to adjust the size of a free passage area on the conveyor-pipe cone (11) or, if a compactor (50) is connected downstream of the conveyor-pipe cone (11, 38), to adjust it on a compactor cone on the basis of the measured temperature, or to control the position or movement of movable flaps (7, 34) of the compactor (50) on the basis of the measured temperature.

2. The screw press according to Claim 1, ***characterized in that*** drainage openings (17 to 20, 33 to 37) are arranged in the conveyor pipe (2, 31).

3. The screw press according to any one of the preceding claims, ***characterized in that*** the drainage openings in the area of the cone tip of the conveyor-pipe cone are smaller than in the area of the cone base or in the area of the cone tip there are more openings per surface than in the area of the cone base.

4. The screw press according to any one of the preceding claims, **characterized in that** a pressure measuring device (41, 42) is arranged in the conveyor pipe (2, 31) and/or in the conveyor-pipe cone (11, 38).

5. The screw press according to any one of the preceding claims, ***characterized in that*** a moisture measuring device (45, 46) is arranged in the conveyor pipe (2, 31) and/or in the conveyor-pipe cone (11, 38).

6. The screw press according to any one of the preceding claims, ***characterized in that*** it comprises a polished and/or chrome-plated inner surface (47) in the area of the conveyor-pipe cone.

7. The screw press according to any one of the preceding claims, ***characterized in that*** the conveyor pipe (2, 31) comprises a water inlet (48), or the drainage openings are completely or partially sealable.

8. The screw press according to any one of the preceding claims, ***characterized in that*** the compactor (50) comprises a rotatable compactor spiral (55).

9. The screw press according to Claim 8, ***characterized in that*** the conveyor spiral (3, 32) and compactor spiral (55) are arranged on the same shaft (60).

10. The screw press according to Claim 9, ***characterized in that*** the shaft (60) is driven on both sides by motors (61, 62).

11. A method for operating a screw press with a conveyor pipe (2, 31) in which a rotatable conveyor spiral (3) is arranged, with a conveyor-pipe cone (11, 38) to which the conveyor spiral (3, 32) conveys, wherein the conveyor spiral terminates at the transition from the conveyor spiral to the conveyor cone and drainage openings (39, 40) are arranged in the conveyor-pipe cone (11, 38), ***characterized in that,*** on the inner side of the conveyor pipe and/or of the conveyor-pipe cone, the temperature of the conveyed material is measured and the speed of the conveyor spiral is adjusted depending on this.

## Revendications

1. Presse à vis (1, 30) comportant un tube convoyeur (2, 31) dans lequel est disposée une hélice convoyeuse rotative (3) et un cône de tube convoyeur (11, 38) vers lequel l'hélice convoyeuse (3, 32) assure le transport, l'hélice convoyeuse se terminant à la transition entre l'hélice convoyeuse et le cône convoyeur et des orifices de drainage (39, 40) étant pratiqués dans le cône de tube convoyeur (11, 38), ***caractérisée en que**,* dans le tube convoyeur (2, 31) et/ou dans le cône de tube convoyeur (11, 38) est disposé un dispositif de mesure de température (21, 43, 44) et qu'elle présente un dispositif de réglage pour régler la dimension d'une zone de transition libre au niveau du cône de tube convoyeur (11) ou, si un compacteur (50) est installé en aval du cône de tube convoyeur (11, 38) au niveau d'un cône de compacteur sur la base de la température mesurée ou pour contrôler la position ou le mouvement de volets mobiles (7, 34) du compacteur (50) sur la base de la température mesurée.

2. Presse à vis selon la revendication 1, ***caractérisée en ce que,*** dans le tube compacteur (2, 31), des orifices de drainage (17 à 20, 33 à 37) sont pratiqués.

3. Presse à vis selon une des revendications précédentes, ***caractérisée en ce que*** les orifices de drainage sont plus petits au niveau de la pointe de cône du cône de tube transporteur qu'au niveau de la base du cône ou qu'au niveau de la pointe du cône, plus d'orifices sont pratiqués par surface qu'au niveau de la base du cône.

4. Presse à vis selon une des revendications précédentes, ***caractérisée en ce qu**'un* dispositif de mesure de pression (41, 42) est disposé dans le tube convoyeur (2, 31) et/ou dans le cône de tube convoyeur (11, 38).

5. Presse à vis selon une des revendications précédentes, ***caractérisée en ce qu**'un* dispositif de mesure d'humidité (45, 46) est disposé dans le tube convoyeur (2, 31) et/ou dans le cône de tube convoyeur (11, 38).

6. Presse à vis selon une des revendications précédentes, ***caractérisée en ce qu**'il* présente, au niveau du cône de tube convoyeur, une surface intérieure polie et/ou chromée (47).

7. Presse à vis selon une des revendications précédentes, ***caractérisée en ce que*** le tube convoyeur (2, 31) présente une arrivée d'eau (48) ou que les orifices de drainage peuvent être entièrement ou partiellement fermés.

8. Presse à vis selon une des revendications précédentes, ***caractérisée en ce que*** le compacteur (50) présente une hélice de compacteur rotative (55).

9. Presse à vis selon la revendication 8, ***caractérisée en ce que*** l'hélice de convoyeur (3, 32) et l'hélice de compacteur (55) sont disposées sur le même arbre (60).

10. Presse à vis selon la revendication 9, ***caractérisée en ce que*** l'arbre (60) est entraîné des deux côtés de moteurs (61, 62).

11. Procédé d'utilisation d'une presse à vis comportant un tube convoyeur (2, 31) dans lequel est disposée une hélice convoyeuse rotative (3), un cône de tube convoyeur (11, 38) vers lequel l'hélice convoyeuse (3, 32) assure le transport, l'hélice convoyeuse se terminant à la transition entre l'hélice convoyeuse et le cône convoyeur et des orifices de drainage (39, 40) étant pratiqués dans le cône de tube convoyeur (11, 38), ***caractérisée en que**,* sur la face intérieure du tube convoyeur et/ou du cône de tube convoyeur, la température du produit convoyé est mesurée et, indépendamment de cela, la vitesse de l'hélice convoyeuse est réglée.
